(19) Europäisches Patentamt
European Patent Office
Office européen des brevets

(11) **EP 2 453 585 A1**

(12) **EUROPEAN PATENT APPLICATION**

(43) Date of publication:
**16.05.2012 Bulletin 2012/20**

(51) Int Cl.:
**H04B 5/00** (2006.01)

(21) Application number: **10190838.2**

(22) Date of filing: **11.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventor: **Thoen, Steven**
**Redhill, Surrey RH1 1DL (GB)**

(74) Representative: **Hardingham, Christopher Mark et al**
**NXP Semiconductors**
**Intellectual Property and Licensing**
**Red Central**
**60 High Street**
**Redhill**
**Surrey RH1 1NY (GB)**

(54) **Near-field communications system**

(57)    A near-field communications system comprises first and second antenna coils disposed such that, in combination, they generate a magnetic field with orthogonal components, wherein the system is configured to generate first and second signals for the first and second antenna coils respectively, the first and second signals being out of phase.

Figure 1

**Description**

The invention relates to a near-field communications system, and to an antenna for such a communications system. Such communications systems are commonly used for hearing aids and other body area network devices.

A traditional magnetic induction communications system comprises a transmitter and receiver, which use inductive coupling between respective transmit and receive coils. In this setup, there are locations where a receive coil due to its relative orientation to the transmit coil does not receive a significant amount of energy, even when the receive coil is close to the transmit coil. These reception dead zones are extremely annoying to the end user as he constantly needs to ensure that the receive antenna remains well aligned with the transmit antenna when a user is moving around.

At each point in space the vector of the magnetic field generated by a transmit coil has a certain fixed orientation. When the field is modulated using a (modulated) carrier, the amplitude of the vector will oscillate at the frequency of the carrier. Its orientation will however remain fixed. The magnetic field modulated at frequency $f_c$ in the core of the coil (assumed for clarity to be located at the origin of the X-Y plane) can be described as follows:

$$\vec{H}_{tot}(t) = H_x^o \cos(2\pi f_c t)\vec{e}_x$$

where $\vec{e}_x$ is the unity vector in dimension x (which is assumed to be aligned with the normal to the plane in which the transmit coil lies) and $H_x^o$ is the amplitude of the magnetic field at the centre of the coil.

At any location *n* in space, the vector of the field generated by the transmit coil will be rotated and attenuated with respect to the magnetic field in the centre of the coil. This field vector can then be written as:

$$\vec{H}_{tot}(t,n) = H_n^o \cos(2\pi f_c t)\vec{e}_n$$

where $\vec{e}_x$ is the unity vector in the direction of the magnetic field vector and $H_n^o$ is the amplitude of the field at location n.

When a receive coil is placed in the magnetic field generated by the transmit coil, a current is induced in the receive coil. The induced current, which is demodulated to recover the transmitted signal, is directly proportional to the magnetic flux density integrated over the area of the receive coil. If the amount of incoming flux and outgoing flux through the coil surface is the same then the corresponding induced current will be zero. As a result, the receiver will not be able to detect the modulated signal. Such locations exist even very close to the transmit coil. This leads to the above-mentioned reception dead zones.

Since the orientation of the transmit coil with respect to the receive coil cannot be controlled in portable applications (such as e.g. hearing aids), these reception dead zones can lead to severely reduced reception quality, even at short distances from the transmitter.

Some prior art techniques have made use of multiple transmit coils with different orientations, which are used sequentially in successive timeslots to transmit the required signal. The receiver then has to pick out the timeslot with the highest reception quality (i.e. the transmit coil with the highest inductive coupling coefficient). However, this scheme reduces the effective data throughput as the same data is sent from each transmit coil sequentially. This approach also increases the power consumption of the transmitter as it needs to send the same data many times.

Another well-known approach is to have the receiver measure the quality of reception for each transmit coil and feed back the coil index with the highest coupling factor to the transmitter. A simpler approach for this scheme would be for the receiver to tell the transmitter to switch coils when the reception quality becomes too low. Both of these approaches, however, require a feedback path from the receiver to the transmitter. This can only be implemented with a symmetrical link where the receiver can also send messages back to the transmitter. However, this requires the receiver to have transmission functionality. Furthermore, some transmitter devices can typically generate more transmit power than a transmitter located at the receiver device due to battery restrictions. Thus, the transmitter might be able to reach the receiver but due to the limited transmit power of the receiver, it may not be able to establish the reverse path. This is for instance the case when the transmitter is located in an accessory device (e.g. a remote control) with a powerful battery and the receiver is located in a hearing aid, which has very limited power available.

According to a first aspect of the invention, there is provided a near-field communications system comprising first and second antenna coils disposed such that, in combination, they generate a magnetic field with orthogonal components, wherein the system is configured to generate first and second signals for the first and second antenna coils respectively, the first and second signals being out of phase.

The invention provides an open-loop transmit coil diversity scheme suitable for near-field communications. By making use of two coils to generate the magnetic field, the generated magnetic field vector rotates in a plane. Therefore, the impact of the above-mentioned dead zones is substantially reduced because the dead zones effectively constantly move round with the magnetic field vector as it rotates. The mechanism for generating the rotating field is very simple since it only requires a specific phase shift between the first and second signals.

The invention provides this improvement in reception quality without requiring extra channel bandwidth or a feedback path from the receiver to the transmitter. Furthermore, the extra complexity required at the transmitter is minimal and no changes are required at the receiver.

The first and second antenna coils may be wound around respective axes that are convergent or not parallel; all that matters is that the magnetic field generated by the first and second coils has orthogonal components. Typically, the first and second antenna coils are wound around orthogonal axes as this is the most effective arrangement.

Normally, the system is configured to generate the first and second signals in quadrature phase.

Preferably, the first and second coils are wound around the same ferrite core.

This results in a system which has the same volume as the prior art systems using a single transmit coil because the same core can be used for both coils.

The number of turns of each of the first and second coils may be selected so that they have the same inductance.

In one embodiment, the system comprises a digital synthesizer for directly generating the first and second signals.

In another embodiment, the system comprises a phase shifter for shifting the phase of a signal to be transmitted by a predefined amount, preferably 90˚, to generate the second signal, the signal to be transmitted being generated by a transmitter coupled to the first coil and to the second coil via the phase shifter.

In a near-field communications system based on this embodiment, the phase shifter may be reciprocal and the system may further comprise a receiver coupled to the first coil and to the second coil via the phase shifter.

In another near-field communications system based on this embodiment, the system may further comprise a receiver and a second phase shifter coupling the receiver to the second coil, the second phase shifter being adapted to shift the phase of a received signal by a predefined amount, preferably 90˚.

Alternatively, the system may comprise a first phase shifter for shifting the phase of a signal to be transmitted by a first predefined amount, preferably -45˚, to generate the first signal and a second phase shifter for shifting the phase of the signal to be transmitted by a second predefined amount, preferably 45˚, to generate the second signal, the signal to be transmitted being generated by a transmitter coupled to the first coil and to the second coil via the first and second phase shifter respectively.

In this case, the first and second phase shifters may be reciprocal and the system may further comprise a receiver coupled to the first coil and to the second coil via the first and second phase shifter respectively.

As another alternative, the system may comprise a delay line for delaying a signal to be transmitted by a predefined amount, preferably a quarter of its period, to generate the first signal, the signal to be transmitted being generated by a transmitter coupled to the first coil via the delay line and to the second coil.

In this case, the delay line may be reciprocal and the system may further comprise a receiver coupled to the first coil via the delay line and to the second coil.

The term "reciprocal" as used above with reference to the phase shifters and delay lines means that the transfer function from input to output of the phase shifter or delay line is the same as the transfer function from output to input. In other words, the phase shifters and delay lines are bi-directional.

In accordance with another aspect of the invention, there is provided an antenna for a near-field communications system according to the first aspect of the invention, the antenna comprising first and second antenna coils wound around a ferrite core in orthogonal directions.

In accordance with a further aspect of the invention, there is provided a body area network comprising one or more devices incorporating the near field communications system according to the first aspect of the invention.

A body area network in the context of this invention is a set of one or more devices wearable on the body and capable of communicating with one another. Thus, the near field communications system of this invention is well suited to this kind of application. The frequency range used by a body area network depends on the type of technology used to implement the body area network. However, as an example Bluetooth® Low Energy is based on a 2.4GHz carrier. Other frequency ranges are also possible including much lower frequencies, such as the range up to 20MHz. An example of a device that could form part of a body area network is a hearing aid retransmitter (also known as a bridge), which receives a signal intended for a hearing aid from a wireless system such as Bluetooth® or an induction loop, for example, and then retransmits the signal to a hearing aid worn by the user. Another example of a device that could form part of a body area network is a remote control which the user can use to control the hearing aids remotely.

Examples of the invention will now be described in detail with reference to the accompanying drawings, in which:

Figure 1 shows a schematic overview of a near-field transmitter system according to the invention;
Figure 2 shows a snapshot of the rotating magnetic field generated by the transmitter of Figure 1;
Figures 3a and 3b show schematic overviews of near-field transceivers according to the invention; and
Figures 4a and 4b show implementations of the antenna.

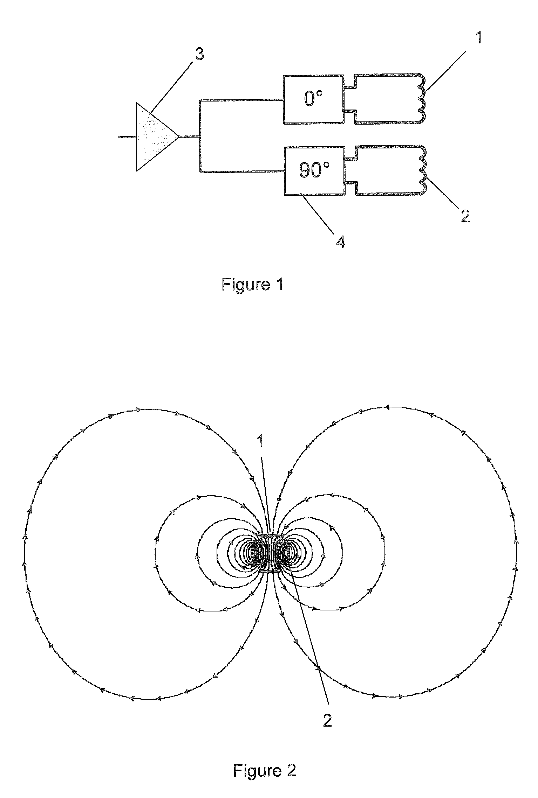

Figure 1 shows a near-field transmitter in which two transmit coils 1 and 2 are disposed orthogonally to one another. The first transmit coil 1 is driven by a transmitter 3 without any phase shift, whereas the second transmit coil 2 is driven by the transmitter 3 via a phase shifter 4. The phase shifter 4 introduces a 90˚ phase shift to the signal to be transmitted. Thus, the second coil 2 is not only physically aligned at 90˚ to the first coil 1, but also transmits a signal that is 90˚ shifted relative to the first coil 1.

The transmitted signal at the centre of both of the transmit coils 1 and 2 (both coils 1 and 2 are assumed to be positioned orthogonally with their centres at the origin) can then be described as follows:

$$\vec{H}_{tot}(t) = H_x^o \cos(2\pi f_c t)\vec{e}_x + H_y^o \sin(2\pi f_c t)\vec{e}_y$$

where $\vec{e}_x$ is the unity vector in dimension x (which is assumed to be aligned with the normal to the plane with which the first transmit coil 1 is parallel), $\vec{e}_y$ is the unity vector in dimension y (which is assumed to be aligned with the normal to the plane with which the second transmit coil 2 is parallel), $H_x^o$ is the amplitude of the carrier on transmit coil 1, whereas $H_y^o$ is the amplitude of the carrier on transmit coil 2.

In a communications scheme using amplitude modulation, both of these amplitudes will be equal to the modulated signal H(t) which needs to be transmitted.

For either phase or frequency modulation, a similar equation can be devised:

$$\vec{H}_{tot}(t) = H_x^o \cos(2\pi f_c t + \phi(t))\vec{e}_x + H_y^o \sin(2\pi f_c t + \phi(t))\vec{e}_y$$

The modulated signal now has a time-varying phase $\phi(t)$ which contains the information. In practice, $H_x^o$ and $H_y^o$ will typically be balanced as much as possible in order to spread the energy equally over both dimensions.

The dual transmit coil scheme shown in Figure 1 leads to a rotating magnetic field. A snapshot of this rotating field at a point in time is shown in Figure 2. The field rotates in the plane of the image in a clockwise direction (although in other implementations it is possible to make the field rotate in an anticlockwise direction, which is just as effective). The resulting field at location $n$, is a time-varying vector sum of the fields generated by both coils as is shown in the following equation:

$$\vec{H}_{tot}(t,n) = H_x^n \cos(2\pi f_c t)\vec{e}_x^n + H_y^n \sin(2\pi f_c t)\vec{e}_y^n$$

where $\vec{e}_x^n$ is the unity vector in the direction of the magnetic field vector generated by the first transmit coil 1 at location $n$, $\vec{e}_y^n$ is the unity vector in the direction of the magnetic field vector generated by the second transmit coil 2 at location $n$, $H_n^x$ is the amplitude of the field generated by the first transmit coil 1 at location $n$, and $H_n^y$ is the amplitude of the field generated by the second transmit coil 2 at location $n$.

As long as $\vec{e}_x^n$ and $\vec{e}_y^n$ are not co-linear (a condition which is true for almost all locations $n$), the magnetic field at location *n* makes one complete rotation within the plane defined by the vectors $\vec{e}_x^n$ and $\vec{e}_y^n$ for every period $T_c=1/f_c$ of the carrier. At time *t=0*, the field is identical to the field generated by transmit coil 1. At time $t=T_c/4$, the field is identical to the field generated by transmit coil 2.

The advantage of the rotating field is that at locations where a single coil would lead to a reception dead zone, a signal will now will be received during the period of time when the field is mainly determined by the other transmit coil which has a different vector orientation. Therefore, the effect of the reception dead zone is severely reduced by this approach through the diversity offered by transmitting from the two transmit coils 1 and 2 simultaneously.

The phase shifter 4 may be implemented using analogue circuitry such as an analogue filter that has a 90˚ phase shift at $f_c$.

In other embodiments, the 90˚ phase shift in the current through the transmit coils 1 and 2 may be implemented in other ways, such as direct digital synthesis of the two quadrature signals, which are then supplied to two separate coil drivers. Alternatively, the signal to be transmitted can be phase shifted by +45˚ for transmit coil 1 and by -45˚ for transmit coil 2 using analogue circuitry. In another alternative the signal for transmit coil 1 can be delayed by $T_c/4$ using an analogue or a digital delay line when using digital modulation. When using digital modulation, using a digital delay line implies that the bit transitions for both coils will no longer be aligned, leading to inter-symbol interference. However, since the inter-symbol interference only lasts a quarter of the period of the carrier, the resulting effect will be minimal.

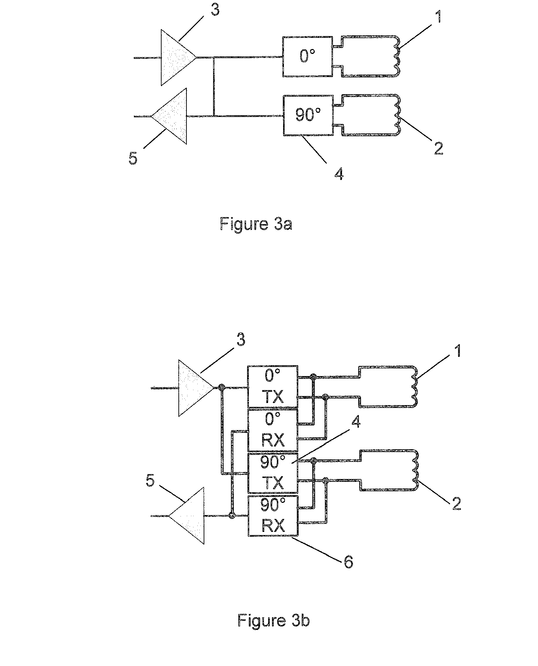

If the phase shifter 4 is reciprocal or bi-directional (i.e. the transfer function from input to output is identical to the transfer function from the output to the input) then the scheme discussed above with reference to Figure 1 will work as a receiving antenna diversity scheme as well without adding any extra components. Such an implementation is shown in Figure 3a, which includes a receiver 5 in addition to the components of Figure 1.

For instance, if the phase shifter 4 is realized with passive analogue components, then the phase shifter 4 will be reciprocal and exactly the same components can be used to combine the signal received on both coils 1 and 2. Hence, during transmission the components will work as a transmission diversity scheme and during reception will function as a receiving diversity scheme. In both cases, the dead zones in space are reduced.

If the phase shifter 4 is not reciprocal (i.e. the transfer function from the output to the input does not produce the required phase shift), then extra components are required to produce a receiving diversity scheme. Figure 3b shows an embodiment comprising a phase shifter 6, which couples the receiver 5 to the second coil 2.

In the embodiment of Figure 1, the use of two transmit coils 1 and 2 ensures that the generated magnetic field vector at each point in space rotates in the plane defined by $\vec{e}_x^n$ and $\vec{e}_y^n$. However, if the normal to the receiving coil in an apparatus for receiving the transmitted signal is orthogonal to the plane defined by $\vec{e}_x^n$ and $\vec{e}_y^n$ then no signal will be received. This is due to the fact that the embodiment of Figure 1 does not 'spread' the signal over all three dimensions but only over two dimensions. Therefore, a receiving coil aligned with the third dimension can still be located at a reception dead zone.

Extending the embodiment of Figure 1 to use three transmit coils is mathematically not possible without using another carrier frequency for the third coil signal because cosine and sine are the only two orthogonal functions for a certain frequency. Using an additional carrier frequency is however not very attractive from a practical point of view since it increases complexity and the amount of bandwidth used.

However, a possible solution to eliminate all reception dead zones is to use the transceiver of Figure 3a or Figure 3b at both transmitting and receiving sides. In this way, the occurrence of reception dead zones is completely eliminated. This is because even if one of the coils at the receiving side is orthogonal to the plane in which the magnetic field vector rotates, the other coil at the receiving end will then lie in this plane and be able to successfully receive the transmitted signal. In other words, both transmitting and receiving sides make use of two dimensions for transmitting and receiving the signal. Since there are only three spatial dimensions, there will always be an intersection between the plane defined by the transmit coils and the plane defined by the receiving coils. Therefore, this approach is guaranteed to completely eliminate any reception dead zones. Thus, the embodiments of Figures 3a and 3b eliminate the existence of reception dead spots, regardless of the orientation of the receiving coil.

Ideally, the coils 1 and 2 should be made mutually independent (i.e. without mutual coupling between the various coils) as this limits the interaction between the coils 1 and 2 and simplifies the design. This is, however, not a necessary condition for the embodiments of Figures 1, 2, 3a and 3b to work. One way of achieving mutual independence is by using a cross-shape made of ferrite material with windings on each of the legs.

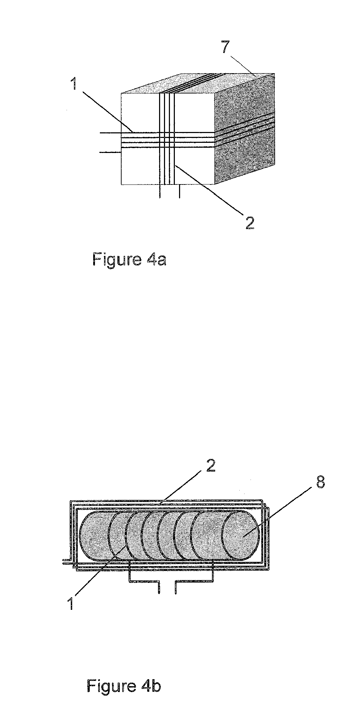

Another way is shown in Figure 4a, in which the two coils 1 and 2 are arranged so that they are wound in orthogonal directions. The first coil 1 is wound around a cube-shaped core 7 of ferrite material, and the second coil 2 is wound around the core 7 orthogonally to the first coil 1. Thus, the two coils 1 and 2 cross over on two opposing faces of the cube-shaped core 7.

To better fit the end product, one of the dimensions of the cube-shaped core 7 could be shrunk. The corresponding loss in inductance in the coil wound around the shorter path can be compensated for by increasing the number of windings in that coil.

Alternatively, a sphere of ferrite material could be used over which the coils 1 and 2 are wound.

Another way of making the two coils is shown in Figure 4b, which makes use of a solenoid or rod-shaped ferrite former 8. In this case, the first coil 1 is wound in the normal manner for winding a solenoid (i.e. along the rod-shaped former 8). The second coil 2 is wound in the orthogonal direction around the ends of the rod-shaped ferrite core 8. This configuration is particularly efficient in terms of the volume occupied. In fact, the total volume of the device does not need to increase to accommodate both coils 1 and 2 because the same ferrite core is used for both. Furthermore, both coils can easily be made to have low mutual coupling (which is hard to achieve when using two separate solenoids as this requires accurate placement of the solenoids with respect to each other).

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1.  A near-field communications system comprising first and second antenna coils disposed such that, in combination, they generate a magnetic field with orthogonal components, wherein the system is configured to generate first and second signals for the first and second antenna coils respectively, the first and second signals being out of phase.

2.  A near-field communications system according to claim 1, wherein the first and second antenna coils are wound around orthogonal axes.

3.  A near-field communications system according to either of the preceding claims, wherein the system is configured to generate the first and second signals in quadrature phase.

4.  A near-field communications system according to any of the preceding claims, wherein the first and second coils are wound around the same ferrite core.

5.  A near-field communications system according to either of the preceding claims, wherein the number of turns of each of the first and second coils is selected so that they have the same inductance.

6.  A near-field communications system according to any of the preceding claims, wherein the system comprises a digital synthesizer for directly generating the first and second signals.

7.  A near-field communications system according to any of claims 1 to 5, wherein the system comprises a phase shifter for shifting the phase of a signal to be transmitted by a predefined amount, preferably 90°, to generate the second signal, the signal to be transmitted being generated by a transmitter coupled to the first coil and to the second coil via the phase shifter.

8.  A near-field communications system according to any of claims 1 to 5, wherein the system comprises a first phase shifter for shifting the phase of a signal to be transmitted by a first predefined amount, preferably -45°, to generate the first signal and a second phase shifter for shifting the phase of the signal to be transmitted by a second predefined amount, preferably 45°, to generate the second signal, the signal to be transmitted being generated by a transmitter coupled to the first coil and to the second coil via the first and second phase shifter respectively.

9.  A near-field communications system according to any of claims 1 to 5, wherein the system comprises a delay line for delaying a signal to be transmitted by a predefined amount, preferably a quarter of its period, to generate the first signal, the signal to be transmitted being generated by a transmitter coupled to the first coil via the delay line and to the second coil.

**10.** A near-field communications system according to claim 7, wherein the phase shifter is reciprocal and the system further comprises a receiver coupled to the first coil and to the second coil via the phase shifter.

**11.** A near-field communications system according to claim 8, wherein the first and second phase shifters are reciprocal and the system further comprises a receiver coupled to the first coil and to the second coil via the first and second phase shifter respectively.

**12.** A near-field communications system according to claim 9, wherein the delay line is reciprocal and the system further comprises a receiver coupled to the first coil via the delay line and to the second coil.

**13.** A near-field communications system according to claim 7, further comprising a receiver and a second phase shifter coupling the receiver to the second coil, the second phase shifter being adapted to shift the phase of a received signal by a predefined amount, preferably 90˚.

**14.** An antenna for a near-field communications system according to any of the preceding claims, the antenna comprising first and second antenna coils wound around a ferrite core in orthogonal directions.

**15.** A body area network comprising one or more devices incorporating a near field communications system according to any of claims 1 to 13.


**Amended claims in accordance with Rule 137(2) EPC.**

**1.** A near-field communications system comprising first (1) and second (2) antenna coils disposed such that, in combination, they generate a magnetic field with orthogonal components, wherein the system is configured to generate first and second signals for the first and second antenna coils respectively, the first and second signals being out of phase, **characterised in that** the system further comprises a phase shifter (4) for shifting the phase of a signal to be transmitted by a predefined amount, preferably 90˚, to generate the second signal, the signal to be transmitted being generated by a transmitter (3) coupled to the first coil (1) and to the second coil (2) via the phase shifter (4), wherein the phase shifter (4) is reciprocal and the system further comprises a receiver (5) coupled to the first coil (1) and to the second coil (2) via the phase shifter (4).

**2.** A near-field communications system comprising first (1) and second (2) antenna coils disposed such that, in combination, they generate a magnetic field with orthogonal components, wherein the system is configured to generate first and second signals for the first and second antenna coils respectively, the first and second signals being out of phase, **characterised in that** the system further comprises a phase shifter (4) for shifting the phase of a signal to be transmitted by a predefined amount, preferably 90˚, to generate the second signal, the signal to be transmitted being generated by a transmitter (3) coupled to the first coil (1) and to the second coil (2) via the phase shifter (4), a receiver (5) and a second phase shifter (6) coupling the receiver (5) to the second coil (2), the second phase shifter (6) being adapted to shift the phase of a received signal by a predefined amount, preferably 90˚.

**3.** A near-field communications system comprising first (1) and second (2) antenna coils disposed such that, in combination, they generate a magnetic field with orthogonal components, wherein the system is configured to generate first and second signals for the first and second antenna coils respectively, the first and second signals being out of phase, **characterised in that** the system further comprises a first phase shifter for shifting the phase of a signal to be transmitted by a first predefined amount, preferably -45˚, to generate the first signal and a second phase shifter for shifting the phase of the signal to be transmitted by a second predefined amount, preferably 45˚, to generate the second signal, the signal to be transmitted being generated by a transmitter coupled to the first coil (1) and to the second coil (2) via the first and second phase shifter respectively, wherein the first and second phase shifters are reciprocal and the system further comprises a receiver coupled to the first coil (1) and to the second coil (2) via the first and second phase shifter respectively.

**4.** A near-field communications system comprising first (1) and second (2) antenna coils disposed such that, in combination, they generate a magnetic field with orthogonal components, wherein the system is configured to generate first and second signals for the first and second antenna coils respectively, the first and second signals being out of phase, **characterised in that** the system comprises a delay line for delaying a signal to be transmitted by a predefined amount, preferably a quarter of its period, to generate the first signal, the signal to be transmitted being generated by a transmitter coupled to the first coil (1) via the delay line and to the second coil (2), wherein the delay line is reciprocal and the system further comprises a receiver coupled to the first coil (1) via the delay line and to the second coil (2).

**5.** A near-field communications system according to claim 1, wherein the first and second antenna coils are wound around orthogonal axes.

**6.** A near-field communications system according to either of the preceding claims, wherein the system is configured to generate the first and second signals in quadrature phase.

**7.** A near-field communications system according to any of the preceding claims, wherein the first and second coils are wound around the same ferrite core.

**8.** A near-field communications system according to either of the preceding claims, wherein the number of turns of each of the first and second coils is selected so that they have the same inductance.

**9.** An antenna for a near-field communications system according to any of claims 1 to 4, the antenna comprising first and second antenna coils wound around a ferrite core in orthogonal directions.

**10.** A body area network comprising one or more devices incorporating a near field communications system according to any of claims 1 to 9.

Figure 1

Figure 2

Figure 3a

Figure 3b

Figure 4a

Figure 4b

Europäisches
Patentamt
European
Patent Office
Office européen
des brevets

# EUROPEAN SEARCH REPORT

Application Number

EP 10 19 0838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/051491 A1 (LU GUI-YANG [US] ET AL) 26 February 2009 (2009-02-26) * figures 1,3,4,7 * * paragraphs [0017], [0018], [0028] * * paragraph [0029] - paragraph [0044] * * paragraphs [0051], [0056] * ----- | 1-15 | INV. H04B5/00 |
| X | US 2006/132352 A1 (SCHANTZ HANS G [US] ET AL SCHANTZ HANS GREGORY [US] ET AL) 22 June 2006 (2006-06-22) * figures 7A,14 * * paragraph [0056] - paragraph [0058] * * paragraph [0074] - paragraph [0076] * ----- | 1-9,14 | |
| X | WO 00/41125 A1 (KONINKL PHILIPS ELECTRONICS NV [NL]) 13 July 2000 (2000-07-13) * figure 2 * * page 4, line 31 - page 5, line 8 * * page 7, line 21 - page 8, line 2 * ----- | 1 | |

TECHNICAL FIELDS SEARCHED (IPC)

H04B

The present search report has been drawn up for all claims

| Place of search | Date of completion of the search | Examiner |
|---|---|---|
| The Hague | 23 March 2011 | Boetzel, Ulrich |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 19 0838

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2011

| Patent document cited in search report | | Publication date | Patent family member(s) | | Publication date |
|---|---|---|---|---|---|
| US 2009051491 | A1 | 26-02-2009 | NONE | | |
| US 2006132352 | A1 | 22-06-2006 | EP | 1829155 A2 | 05-09-2007 |
| | | | JP | 2008524588 T | 10-07-2008 |
| | | | US | 2006244673 A1 | 02-11-2006 |
| | | | WO | 2006080983 A2 | 03-08-2006 |
| WO 0041125 | A1 | 13-07-2000 | AT | 345540 T | 15-12-2006 |
| | | | DE | 69933996 T2 | 04-10-2007 |
| | | | EP | 1058907 A1 | 13-12-2000 |
| | | | JP | 2002534878 T | 15-10-2002 |
| | | | US | 6219530 B1 | 17-04-2001 |

EPO FORM P0459